# EUROPEAN PATENT APPLICATION

(11) **EP 4 306 839 A1**
(43) Date of publication of application: **17.01.2024**
(21) Application number: 22185334.4
(22) Date of filing: 15.07.2022
(51) Int. Cl.: F16L 55/115, F16L 57/00, F16L 59/16

(54) **AN END CAP FOR A MEDIUM PIPE OF A COMPOSITE PIPE**

(71) Applicant: Logstor Denmark Holding ApS, 9670 Logstor (DK)
(72) Inventor: Strunck, Azeem Bo, Logstor (DK); Overgaard, Kristian, Logstor (DK)
(74) Representative: Tomkins & Co

(57) **Abstract**

An end cap for a medium pipe of a composite pipe, the end cap comprising:
(i) a cap body (10, 11) having an open end (12), a closed end (13) opposite the open end, and a blind bore (14) defined therein extending into the cap body from the open end toward the closed end, the bore for receiving the end portion of an inner medium pipe (2) so that the end portion of the medium pipe is enclosed within the end cap by inner walls (16) of the cap body;
(ii) a corrosion inhibitor that prevents corrosion of the inner medium pipe.

## Description

### Field of the Invention

The present invention relates to an end cap for a medium pipe of a composite pipe.

### Background to the Invention

The present invention relates to the field of composite pipes. Of particular interest are composite pipes which are preinsulated pipes for e.g. district heating, district cooling etc. Typically such composite pipes comprise at least one medium conveying pipe often referred to as an inner medium pipe, an insulating material surrounding at least a part of the length of the inner medium pipe and an outer casing often in the form of a jacket pipe at least partly surrounding the insulating material. For heating and cooling solutions in, for example district heating and in the oil and gas sectors and for industry insulation, preinsulated pipes are widely used.

An assembly of a preinsulated pipe typically comprises one or more inner pipes of either metal or plastic, an insulation layer such as polyurethane foam and a casing or jacket pipe of metal or plastic.

"Twin pipes" are common in the preinsulated pipe field. These are preinsulated pipes with two inner pipes. Typically one inner pipe is for supply of a fluid and the second is for the return of the fluid.

Such preinsulated pipes are mostly used for any media at a temperature between -200°C and +315°C in order to provide insulation of different media.

It is a requirement in the industry to join lengths of such preinsulated pipes together. This joining is required whether or not the preinsulated pipe is flexible.

For preinsulated pipes where the medium pipe is metal pipe such as a steel pipe the methods of joining include welding and the use of joining fittings such as couplings.

Welding may be used to join one medium pipe from one length of preinsulated pipe to the medium pipe of another length of preinsulated pipe.

Welding in this industry can be carried out by Autogenous welding, gas metal arc welding such as MAG (Metal active gas), MIG (Metal Inert gas), TIG (Tungsten Inert Gas). Typically such welding is carried out following EN ISO 9692-1.

While welding is a readily available solution it has some potential disadvantages:
- There may be difficult working conditions
- Smoke issues especially if another material such as a coating has been applied to the pipe
- Welders needs to be certified
- Availability of welders may be an issue
- Preparation of the surfaces to be welded may be required
- Residual magnetism is also a problem when welding metal pipes.

Various couplings may be available to join one medium pipe from one length of preinsulated pipe to the medium pipe of another length of preinsulated pipe.

Couplings know to be available for this application include press fit couplings.

While couplings are available solutions they have some potential disadvantages:
(i) Couplings with gaskets such as O-rings which may be acceptable for use with preinsulated pipes that are located in use above ground may not be acceptable for preinsulated pipes that are below ground in buried systems.
(ii) Couplings may not be suited for twin pipes due to space limitations between pipes and axial movement during the fitting procedure.
(iii) Some couplings leak as they cannot meet the demanding conditions they experience in use.
(iv) Some preparation of the medium pipe, e.g. grinding of the end of a medium pipe, may be required before a coupling may be applied.

Notwithstanding the foregoing it is desirable to provide solutions to allow for more convenient joining of pipes.

### Summary of the Invention

In one aspect, the present invention provides an end cap for a medium pipe of a composite pipe, the composite pipe comprising:
(a) an inner medium pipe, the inner medium pipe made of a metal,
(b) an insulation material about the inner medium pipe,
(c) an outer casing about the insulation material,
an end portion of the inner medium pipe extending past the insulation to allow coupling of the inner medium pipe to another inner medium pipe,
wherein the end cap comprises:
(i) a cap body having an open end, a closed end opposite the open end, and a blind bore defined therein extending into the cap body from the open end toward the closed end, the bore for receiving the end portion of the inner medium pipe so that the end portion of the medium pipe is enclosed within the end cap by inner walls of the cap body;
(ii) a corrosion inhibitor that prevents corrosion of the inner medium pipe.

An end cap of the present invention will prohibit condensing water from reaching the surface of the metal pipe (such as a steel pipe) protected by the end cap. Furthermore the prevention of corrosion makes the joining of the inner medium pipe of two lengths of such a composite using a press-fitting easier. In this respect a press-fitting is a coupling which joins the inner pipes together. Coupling is achieved using an interference fit between the inner pipe(s) and the fitting. The inner pipe(s) and the press-fitting are joined together under pressure by insertion of one in the other. For example the inner pipe(s) may be forced under pressure into a slightly smaller hole in the fitting/coupling. In this way welding and its consequent disadvantages are avoided. Furthermore there is no corrosion to cause problems with press-fitting. As tolerances are very tight to achieve a joint that can withstand large forces without separating corrosion could prevent one part being inserted in another. Removal of corrosion could also cause a poorer coupling because tight tolerances may have been interfered with by the removal of material.

The corrosion inhibitor is an active substance that inhibits corrosion of metals. It may be considered an anti-corrosion agent. It may be considered an anti-corrosion chemical.

In an end cap according to the present invention the corrosion inhibitor may be present as a coating within the blind bore of the cap body. Additionally or alternatively the corrosion inhibitor may incorporated into the cap body.

Suitably the corrosion inhibitor comprises a nitrite. For example the corrosion inhibiter may be selected from the group consisting of sodium nitrite, calcium nitrite, potassium nitrite and organic-based nitrites and combinations thereof.

The corrosion inhibitor may be present as a coating on the cap body or may be incorporated into the cap body and the corrosion inhibitor is present in an amount from about 0.5% to about 10% by weight, such as 0.75 to 5% by weight, for example 1% to 3% by weight, desirably about 2% by weight based on the weight of the end cap.

Desirably the cap body is resiliently stretchable. This allows for stretch fitting of the end cap thus preventing ingress of moisture and helping to avoid/reduce corrosion.

Desirably the end cap is provided with at least one vent for example in the form of at least one aperture, for example through the cap body at a desired position such as through the closed end. The vent is positioned to allow for expansion (and indeed contraction) of air within the medium pipe, for example due to different ambient temperatures when the cap is in place. Typically this will mean the vent is positioned to allow venting to the open end of the inner medium pipe. This means that before the composite pipe is welded to another for use, venting can occur to relieve air pressure. The venting (cross-sectional) area through the end cap such as the open (cross-sectional) area of the aperture(s) may be from about 5 and 80 mm².

Suitably the cap body has a tear portion such as a tear strip that can be torn for removal of the end cap from the end portion of the inner medium pipe. This allows for ease of removal.

In one arrangement the at least one vent, for example in the form of at least one aperture, may be formed in the tear portion. It may be desirable for example to provide the aperture in the tear portion so that the aperture could be used for a dual purpose - to vent and to allow gripping and pulling the tear portion. For example a tool could be inserted into the aperture and used to grip the tear portion to allow removal of the tear portion. Additionally or alternatively a frangible connection which connects the tear portion to the remainder of the cap may be provided with one or more vents. For example one or more perforations defined in a frangible connection may act as a vent.

The cap body may be formed by moulding. In such a case the corrosion inhibitor may be incorporated into the end cap during moulding.

Desirably the end cap is made from polyethylene.

Optionally an end cap according to the present invention comprises one or more projections on the exterior of the cap body for gripping to stretch the cap body for fitting the cap body to the end portion of the inner medium pipe. This provides a convenient means to fit the end cap. Suitably the at least one projection is adapted to be prised to stretch the cap body for fitting the cap body to the end portion of the inner medium pipe. Such projections may be from about 0.1 mm to about 250 mm in height above the cap body.

Additionally or alternatively at least one projection may have an aperture defined therein to allow gripping to stretch the cap body for fitting the cap body to the end portion of the inner medium pipe.

Optionally the at least one projection comprises a collar about the cap body. This is a simple yet robust arrangement and is also useful for circumferential stretching.

The inner metal medium pipe may be a steel pipe.

The invention also relates to an assembly comprising a composite pipe with an end cap thereon, the composite pipe comprising:
(a) an inner medium pipe, the inner medium pipe made of a metal,
(b) an insulation material about the inner medium pipe,
(c) an outer casing about the insulation material,
an end portion of the inner medium pipe extending past the insulation to allow coupling of the inner medium pipe to another inner medium pipe wherein the end cap comprises:
(i) a cap body having an open end, a closed end opposite the open end, and a blind bore defined therein extending into the cap body from the open end toward the closed end, the bore for receiving the end portion of the inner medium pipe so that the end portion of the medium pipe is enclosed within the end cap by inner walls of the cap body;
(ii) a corrosion inhibitor that prevents corrosion of the inner medium pipe,
(iii) and the end cap located on the end portion of the inner medium pipe.

In an assembly of the invention the end cap may be as defined herein.

In an assembly of the invention the end portion of the inner medium pipe may have an outer diameter that is less than that of the reminder of the inner medium pipe.

The invention also relates to a method of joining pipes to each other comprising the steps of:
(a) providing an assembly according to the invention ,
(b) removing the end cap;
(c) joining the inner medium pipe to another medium pipe using a press fitting.

In a method of the invention the other medium pipe may also be a composite pipe and that other composite pipe comprises:
(i) an inner medium pipe, the inner medium pipe made of a metal,
(ii) an insulation material about the inner medium pipe,
(iii) an outer casing about the insulation material.

A method of the invention may comprise the steps of:
(a) providing a first assembly according to the invention,
(b) removing the end cap from the first assembly;
(c) providing a second assembly according to the invention,
(d) removing the end cap from the second assembly; and
(e) joining the inner medium pipe of the first assembly to the inner medium pipe of the second assembly using a press fitting.

The composite pipe of the invention include preinsulated pipes, including those that are continuously manufactured. The composite pipe of the invention can further comprise a diffusion barrier in the form of e.g. a film or foil arranged between the insulation layer and the casing material, for example a metallic layer such as an aluminium layer and/or a layer of polymeric material at least partly surrounding the insulating material, the layer of polymeric material comprising at least one layer of a material or combination of materials some being permeable to water or water vapour, and having significantly better properties than PE, for resistance against diffusion of oxygen and carbon dioxide, where said material or combination of materials includes at least one of the materials PVDC (polyvinylidene dichloride), PA (polyamide) and EVOH (ethylene-vinyl alcohol copolymer). Any water vapour is allowed to escape from the insulation material, but also that carbon dioxide is kept within the insulation material and thereby avoiding an amount of ambient oxygen to build up in the insulating material.

The end cap of the invention may have an inner diameter in the dimension range from about 20 mm to about 550 mm.

Typically the end cap of the invention will cover sufficient area of the end portion. For example the end cap may cover the surface area of the end portion which is up from about 20 to about 400 mm in length (as measured parallel to a longitudinal axis of the inner medium pipe).

The end cap, including any projections thereon may be made from a material with a thickness from about 0.1 to about 4 mm. For example from a polymer material of this thickness.

Any suitable foam may be used including preformed foams which are packed into the space between the outer casing and the inner medium pipe(s).

Alternatively the composite pipe may be formed by foaming a suitable foam within the space between the outer casing and the inner medium pipe(s). One suitable foam is a polyurethane foams.

Any suitable blowing agent may be used in the formation of such foams. Blowing agent may include CO₂ and/or one or more hydrofluoroolefins (HFOs) such as 1233zd or any combination of blowing agents thereof.

While composite pipes of the invention may be flexible, generally composite pipes of this invention will be rigid.

A composite pipe of the invention may include, as an insulation barrier, a vacuum insulation panel (VIP) such as is described in European patent publication no. EP 3 354 959.

The composite pipe of the invention may be made by any suitable method. For example the composite pipe of the invention may be made as by a method comprising the steps of:
(i) covering an inner pipe assembly comprising at least one inner pipe with a film;
(ii) dispensing an expandable insulation material in a liquid state between the inner pipe assembly and the film thereby preparing an initial pipe assembly comprising a layer of expanding insulation material positioned between the film and the inner pipe assembly.
Optionally this method may include the steps of:
(iii) extruding a layer of outer casing onto the initial pipe assembly before the insulation material has expanded completely, thereby creating a still expanding insulated pipe assembly; and
(iv) leading the still expanding insulated pipe assembly through a corrugator having an inner corrugated surface giving the casing a corrugated shape as the at least one layer of expanding insulation material continues to expand thereby producing the insulated pipe in corrugated casing.

### Brief Description of the Drawings

Embodiments of the invention will be described, by way of example only, with reference to the accompanying drawings in which:
**Figure 1** is a side view of a composite pipe which is a preinsulated pipe;
**Figure 2** is a side view of the composite pipe of **Figure 1** with an end cap positioned for overfitting to an end portion of an inner medium pipe;
**Figure 3** is a side view of the composite pipe of **Figure 1** with an end cap positioned for overfitting to the end portion of an inner medium pipe and with a tool positioned to stretch the end cap for overfitting to the end portion;
**Figure 4** is the same view as **Figure 3** but with the tool actuated to stretch the end cap;
**Figure 5** is a similar view as **Figure 4** but in part sectional view and with the end cap fitted onto the end portion of the inner medium pipe;
**Figure 6** is a similar view and embodiment to **Figure 5** again in part sectional view and with the end cap fitted onto the end portion 5 but with the end cap covering all of the end portion;
**Figure 7** is a schematic representation of the end cap of **Figure 6** removed from the end portion of **Figure 6****;**
**Figures 8A, 8B****,** **8C, 8D** and **8E** all show an alternative embodiment of an end cap of the invention in which:

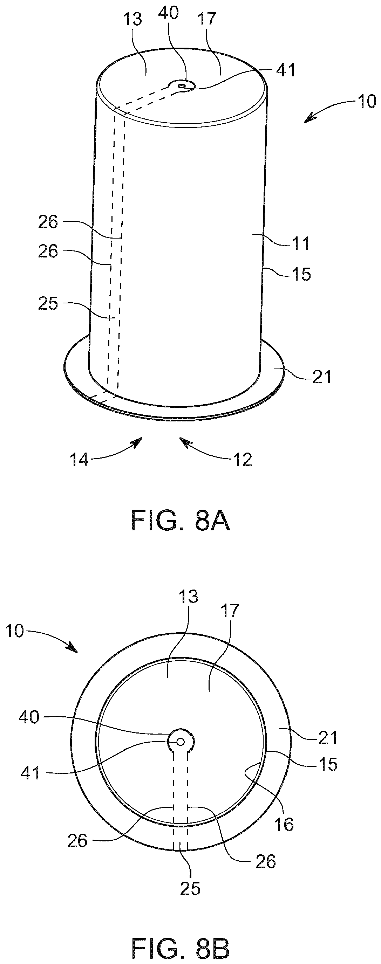

**Figure 8A** is a perspective view from above and one side of the end cap;
**Figure 8B** is a top plan view of the end cap of **Figure 8A****;**

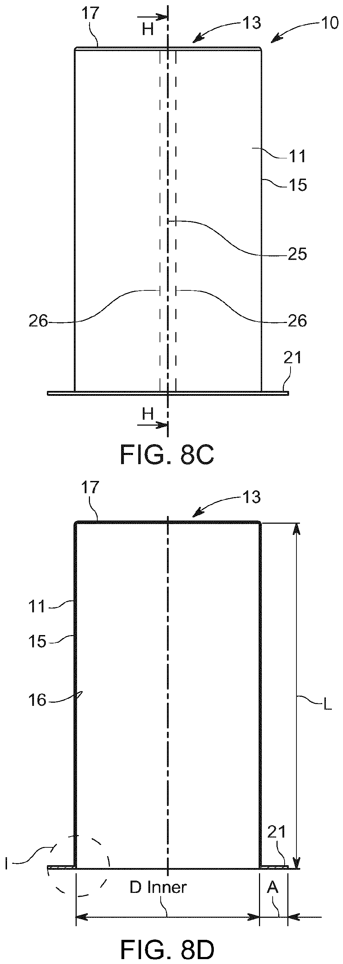

**Figure 8C** is a side elevation of the end cap of **Figure 8A****;**
**Figure 8D** is a sectional view of the end cap of **Figure 8A** taken along the line H-H shown in **Figure 8C****;** and

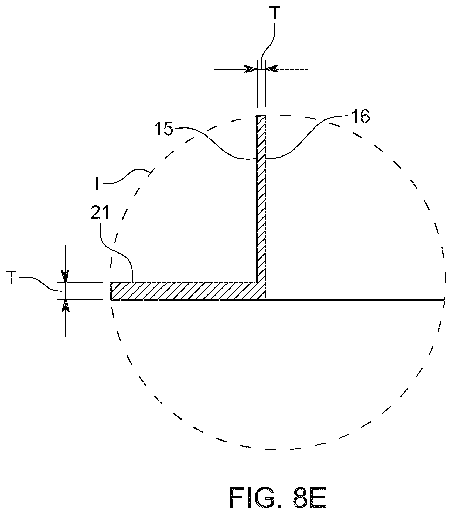

**Figure 8E** is an enlarged view of the part of the end cap labelled I in **Figure 8D****.**

### Detailed Description of the Drawings

The invention will now be described in a non-limiting way with reference to the drawings.

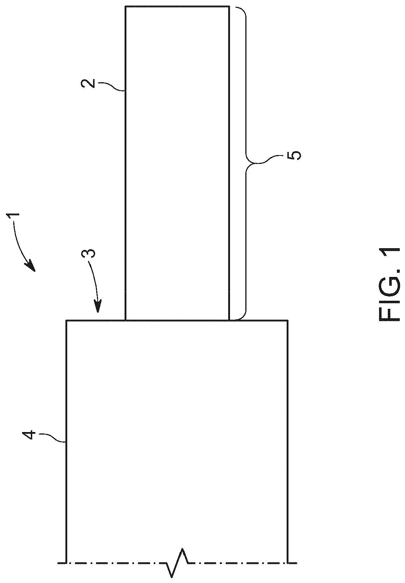

**Figure 1** is a partial side view of a composite pipe 1 which is a preinsulated pipe. For the purposes of illustration the length of the composite pipe 1 shown is limited. It will be appreciated that the composite pipe may be many meters long.

The composite pipe 1 comprises an inner medium pipe 2. In the embodiment the inner medium pipe 2 is made of a metal such as steel. It will be appreciated that the metal may be any metal including alloys. Generally the inner medium pipe 2 will be rigid but it may be flexible.

An insulation material 3 is provided about the inner medium pipe.

An outer casing or outer pipe 4 is provided about the insulation material 3. So in the composite pipe 1 shown the inner medium pipe 2 extends through the insulation material 3 and the outer casing 4. As shown an end portion 5 of the inner medium pipe 2 extends past the insulation 3 and the outer casing 4. This is to allow coupling of the inner medium pipe of this length of composite pipe 1 to an inner medium pipe of a second length of composite pipe 1. It will be appreciated that the inner medium pipe is open on opposing ends.

The inner medium pipe 2 and the outer casing 4 are circular in cross-section.

It will be appreciated that a similar end portion of the inner medium pipe 2 will extend past the insulation 3 and the outer casing 4 at the other end of the composite pipe 1. However, as above, for the purposes of illustration the length of the composite pipe 1 shown is limited and so the other end of the composite pipe 2 is not shown.

Furthermore while only one inner medium pipe 2 is shown it will be appreciated that two or more inner pipes may be provided wherein both or all inner pipes are spaced apart within the insulation material 3.

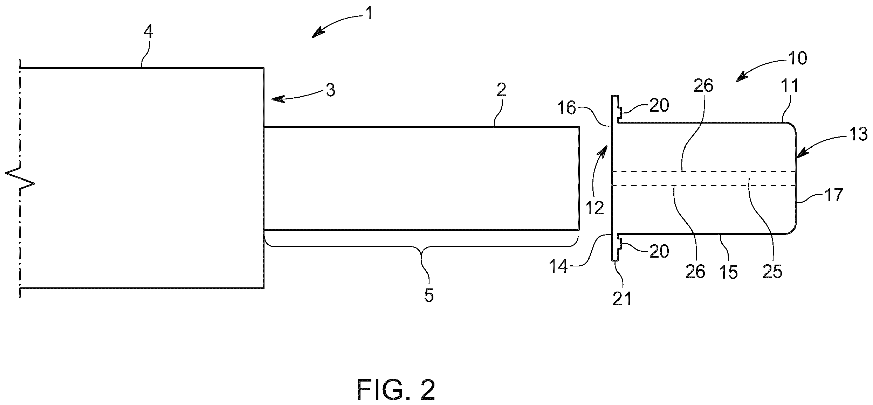

**Figure 2** is a side view of the composite pipe of **Figure 1** with an end cap 10 positioned for overfitting to the end portion 5 of the inner medium pipe 2. Again it will be appreciated that an end cap 10 could be provided for each inner medium pipe.

The end cap 10 comprises a cap body 11 having an open end 12, a closed end 13 opposite the open end 12, and a blind bore 14 defined therein extending into the cap body 11 from the open end 12 toward the closed end 13.

The cap body 11 has an annular side wall 15 and inner walls 16 thereof define the blind bore 14. In this way the blind bore 14 is for receiving the end portion 5 of the inner medium pipe 2 so that the end portion 5 of the medium pipe 2 is enclosed within the end cap 10 by the inner walls 16 of the cap body 11. The closed end 13 defined by an end wall 17 defines the closed end 13 of the cap body 11.

The end cap 10 may be made from any suitable material(s) including plastics material for example polyethylene.

A corrosion inhibitor is present on the end cap 10 to prevent corrosion. The corrosion inhibitor may be present as a coating within the blind bore 14 of the cap body 11. Alternatively the corrosion inhibitor may be incorporated into the cap body 11 for example by being added to a material which is subsequently formed into an end cap 10.

The corrosion inhibitor prevents corrosion of the inner medium pipe 2 and in particular prevents corrosion of at least part of the end portion 5 of the medium pipe 2.

Where the corrosion inhibitor is present as a coating on the cap body or is incorporated into the cap body, the corrosion inhibitor may be present in an amount from about 0.5% to about 10% by weight, such as 0.75 to 5% by weight, for example 1% to 3% by weight, desirably about 2% by weight based on the weight of the end cap.

Any suitable corrosion inhibitor may be used, for example a nitrite. Suitably the corrosion inhibitor is selected from the group consisting of sodium nitrite, calcium nitrite, potassium nitrite and organic-based nitrites and combinations thereof.

The end cap 10 comprises projections 20 which are on the exterior of the cap body 11.

In the embodiment shown and, as is desirable for all embodiments, a projection in the form of a collar or flange 21 which is integrally formed with the cap body 11 is provided. In the embodiment the collar 21 extends all the way about the open end 12 of the end cap 10 but it will be appreciated that for any embodiment there may be discreet projections for example a collar formed in two or more discreet segments.

On the collar 21 are nubs 20 which are for gripping to stretch the cap body 10 for fitting the cap 10 body to the end portion 5 of the inner medium pipe 2.

Stretch fitting allows for a very tight fit of the cap body 10 on the end portion 5. A tight fit is important so as to exclude the ingress of moisture etc. and so as to assist in the prevention of corrosion.

The nubs 20 are adapted to be prised to stretch the cap body 11 for fitting the cap body 11 to the end portion 5 of the inner medium pipe 2.

It will be appreciated that the present invention is not limited to having one or more such nubs 20 and for example one or more apertures could be provided in the collar 21. For example the collar 21 may have an aperture defined therein to allow gripping to stretch the cap body 11 for fitting the cap body 11 to the end portion 5 of the inner medium pipe 2.

The cap body 11 has a tear portion in the form of a tear strip 25 (defined by two lines 26 of tear perforations - this creates a frangible strip. It is to be noted that it is desirable that the tear perforations do not provide a means for moisture to reach the end portion through the end cap and so the perforations may not extend the whole way through the end cap wall) that can be torn for removal of the end cap 10 from the end portion 5 of the inner medium pipe 2. Though it is noted, and as described below, one or more perforations on the end wall could be used as a vent.

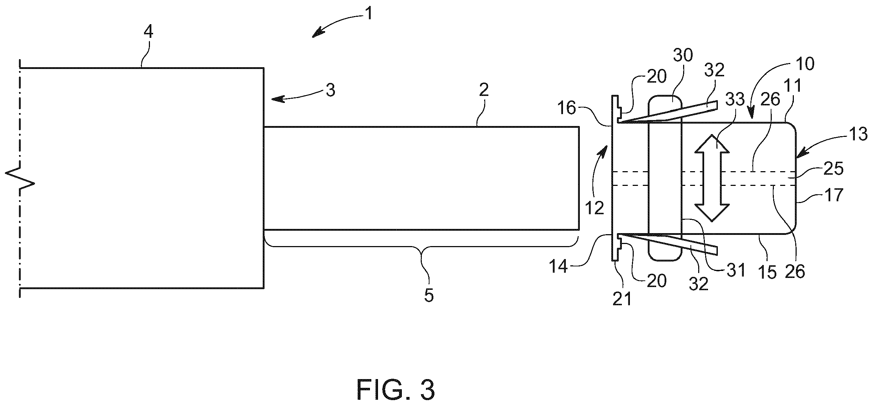

**Figure 3** is a side view of the composite pipe of **Figure 1** and **Figure 2** with the end cap 10 positioned for overfitting to the end portion 5 of the inner medium pipe 2 and with a tool 30 positioned to stretch the end cap 10 for overfitting to the end portion 5.

It will be appreciated that any suitable tool could be utilised for the stretching of the end cap 10. However a tool that has opposing lever arms is suitable for use in all embodiments of the invention.

In the embodiment the tool 30 comprises an annular body 31 which allows it to be overfitted to the end cap 10 as shown in **Figure 3****.** Lever arms 32 on the annular body 31, which have a range of lever movement relative thereto, allow for prising against nubs 20 so as to stretch the end cap body 11. The stretching action that is applied using the tool 30 is indicated by double-headed arrow 33.

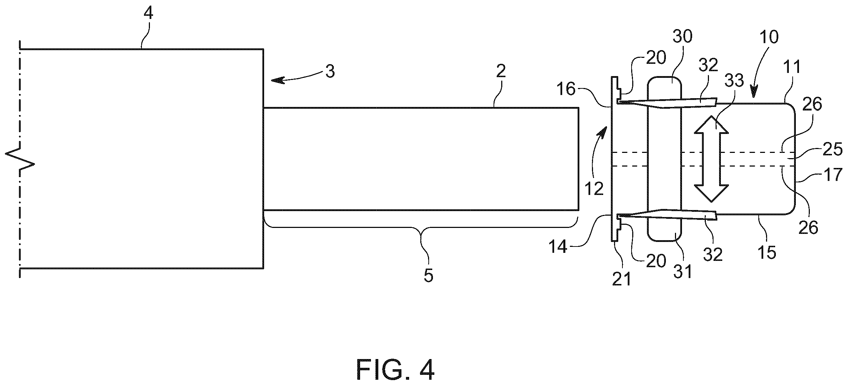

**Figure 4** is the same view as **Figure 3** but with the tool 30 actuated to stretch the end cap 10. In particular the lever arms 32 have been moved towards each other so as to impart an opening action to the end cap 10. The end cap 10 can now be overfitted to the end portion 5 in a stretched condition. It will be appreciated that in all embodiments when the stretching is released the end cap will resiliently close onto the end portion 5 of the inner medium pipe 2 thus providing a tight fit. In particular a fit that prevents moisture ingress is desired.

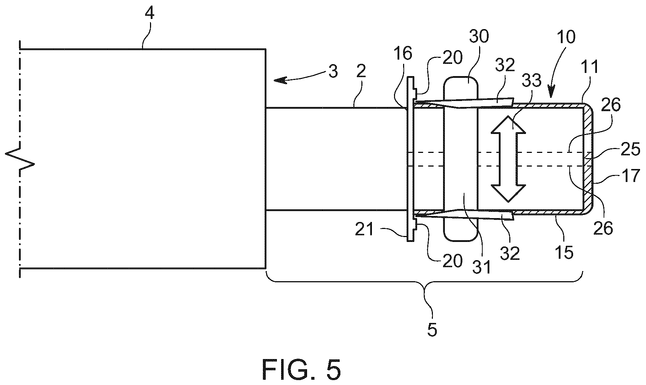

**Figure 5** is a similar view as **Figure 4** but in part sectional view and with the end cap 10 fitted onto the end portion 5. In the embodiment shown the end cap 10 only covers part of the end portion 5.

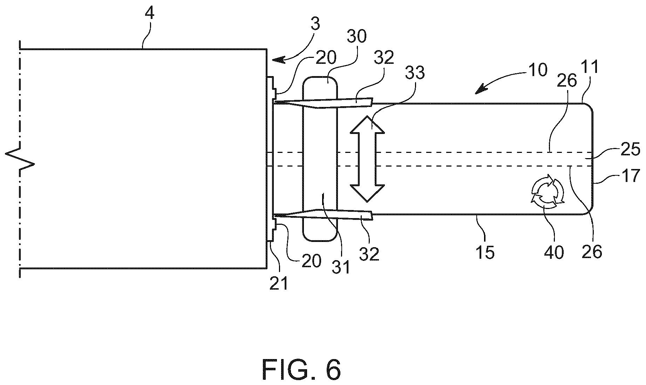

**Figure 6** is a similar view and embodiment to **Figure 5** again in part sectional view and with the end cap 10 fitted onto the end portion 5. In the embodiment shown the end cap 10 covers all of the end portion 5.

As is desirable for all embodiments, and as indicated in **Figure 6** by the recycle arrow 40 the end cap 10 is desirably reusable or compostable.

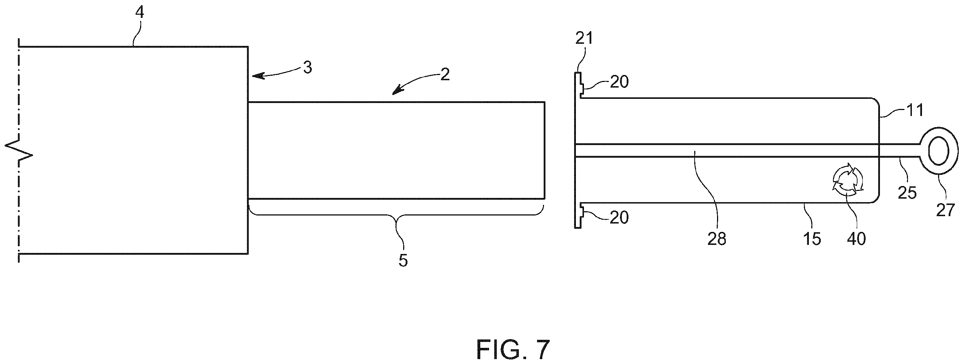

**Figure 7** is a schematic representation of the end cap 10 of **Figure 6** removed from the end portion of **Figure 6****.** In particular the tear strip 25 has been ripped from the end cap 10 to create a longitudinal tear 28 in the end cap 10. This allows for ease of removal of the end cap 10 from the end portion 5. In the embodiment of **Figure 7** a ring pull tab 27 has been provided on the tear strip 25 to allow for ease of removal.

**Figures 8A, 8B****,** **8C, 8D** and **8E** all show an alternative embodiment of an end cap 10 of the invention. The end cap 10 comprises a cap body 11 having an open end 12, a closed end 13 opposite the open end 12, and a blind bore 14 defined therein extending into the cap body 11 from the open end 12 toward the closed end 13.

The cap body 11 has an annular side wall 15 and inner walls 16 thereof define the blind bore 14. In this way the blind bore 14 is for receiving the end portion 5 of the inner medium pipe 2 so that the end portion 5 of the medium pipe 2 is enclosed within the end cap 10 by the inner walls 16 of the cap body 11. The closed end 13 defined by an end wall 17 defines the closed end 13 of the cap body 11.

As with all embodiments of an end cap of the invention a corrosion inhibitor is present on the end cap 10 to prevent corrosion. The corrosion inhibitor may be present as a coating within the blind bore 14 of the cap body 11. Alternatively the corrosion inhibitor may be incorporated into the cap body 11 for example by being added to a material which is subsequently formed into an end cap 10.

In the embodiment shown in **Figures 8A, 8B****,** **8C, 8D** and **8E** a projection in the form of a collar or flange 21 which is integrally formed with the cap body 11 is provided. the collar 21 extends all the way about the open end 12 of the end cap 10.Grips such as nubs may be provided on the collar 21 for gripping to stretch the cap body 10 for fitting the cap 10 body to the end portion 5 of the inner medium pipe 2.

The cap body 11 has a tear portion in the form of a tear strip 25 defined by two lines 26 of tear perforations - this creates a frangible strip which, as in all embodiments allows tearing of the side wall and also desirably tearing of the collar 21.

In the embodiment shown in **Figures 8A, 8B****,** **8C, 8D** and **8E** the lines 26 of tear perforations do not allow for venting. However as seen especially in **Figures 8A** and **8B** a vent in the form of an aperture 41 is provided in the end wall 17. It will be appreciated that this allows venting through the end cap 10 to the interior of the medium pipe 3 when the end cap 10 is over fitted onto the end portion 5 of the medium pipe 3. In this arrangement the at least one vent, in the form of the aperture 41, is formed in the tear portion in the form of the tear strip 25. The aperture 41 can be used for a dual purpose - firstly to vent and secondly to allow gripping and pulling the tear portion. For example a tool could be inserted into the aperture 41 and used to grip the tear portion to allow removal of the tear portion. In the embodiment the vent aperture 41 is provided in an end 40 of the tear portion which is on the end wall 17 of the cap 10. In the embodiment the end 40 has an at least partially circular shape.

**Figure 8C** is a side elevation of the end cap 10 and shows the tear strip 25.

In the sectional view of the end cap 10 shown in **Figure 8D** (taken along the line H-H shown in **Figure 8C****)** some dimensions which apply to all embodiments are indicated. L indicates the length of the end cap 10 and as above this may be from about 20 to about 400 mm in length to cover a corresponding length of the inner medium pipe 3. **A** indicates the height of the projection which in the embodiment is the collar 21. As indicated above the collar/ projection(s) may be from about 0.1 mm to about 250 mm in height above the cap body so the dimension **A** may be from about 20 to about 400 mm. The dimension **D inner** is the inner diameter of the end cap 10 of the invention. As indicated above an inner diameter in the dimension range from about 20 mm to 550 mm is desirable so the dimension **D inner** may be from about 20 mm to 550 mm.

In the enlarged view (of the portion of the end cap 10 labelled I in **Figure 8D****)** shown in **Figure 8E** the thickness **T** is indicated. As mentioned above the end cap 10, including any projections thereon such as collar 21 may be made from a material with a thickness from about 0.1 to about 4 mm. So the dimension **T** may be from about 0.1 to about 4 mm. As shown and as is desirable for all embodiments the thickness of the projections may be greater than that of the remainder of the end cap 10.

The words "comprises/comprising" and the words "having/including" when used herein with reference to the present invention are used to specify the presence of stated features, integers, steps or components but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. An end cap for a medium pipe of a composite pipe, the composite pipe comprising:
(a) an inner medium pipe, the inner medium pipe made of a metal,
(b) an insulation material about the inner medium pipe,
(c) an outer casing about the insulation material,
an end portion of the inner medium pipe extending past the insulation to allow coupling of the inner medium pipe to another inner medium pipe,
wherein the end cap comprises:
(i) a cap body having an open end, a closed end opposite the open end, and a blind bore defined therein extending into the cap body from the open end toward the closed end, the bore for receiving the end portion of the inner medium pipe so that the end portion of the medium pipe is enclosed within the end cap by inner walls of the cap body;
(ii) a corrosion inhibitor that prevents corrosion of the inner medium pipe.

2. An end cap according to any preceding claim wherein the corrosion inhibitor is present as a coating within the blind bore of the cap body.

3. An end cap according to any preceding claim wherein the corrosion inhibitor is incorporated into the cap body.

4. An end cap according to any preceding claim wherein the corrosion inhibitor comprises a nitrite.

5. An end cap according to Claim 4 wherein the corrosion inhibitor is selected from the group consisting of sodium nitrite, calcium nitrite, potassium nitrite and organic-based nitrites and combinations thereof.

6. An end cap according to any preceding claim wherein the corrosion inhibitor is present as a coating on the cap body or is incorporated into the cap body and the corrosion inhibitor is present in an amount from about 0.5% to about 10% by weight, such as 0.75 to 5% by weight, for example 1% to 3% by weight, desirably about 2% by weight based on the weight of the end cap.

7. An end cap according to any preceding claim wherein the cap body is resiliently stretchable.

8. An end cap according to any preceding claim wherein the cap body has a tear portion such as a tear strip that can be torn for removal of the end cap from the end portion of the inner medium pipe.

9. An end cap according to any preceding claim wherein the cap body is formed by moulding and/or wherein the end cap is made from polyethylene.

10. An end cap according to any preceding claim that comprises one or more projections on the exterior of the cap body for gripping to stretch the cap body for fitting the cap body to the end portion of the inner medium pipe; optionally wherein at least one projection is adapted to be prised to stretch the cap body for fitting the cap body to the end portion of the inner medium pipe; and/or optionally wherein at least one projection has an aperture defined therein to allow gripping to stretch the cap body for fitting the cap body to the end portion of the inner medium pipe, for example wherein at least one projection comprises a collar about the cap body.

11. An end cap according to any preceding claim wherein the inner metal medium pipe is a steel pipe.

12. An assembly comprising a composite pipe with an end cap thereon, the composite pipe comprising:
(a) an inner medium pipe, the inner medium pipe made of a metal,
(b) an insulation material about the inner medium pipe,
(c) an outer casing about the insulation material,
an end portion of the inner medium pipe extending past the insulation to allow coupling of the inner medium pipe to another inner medium pipe wherein the end cap comprises:
(i) a cap body having an open end, a closed end opposite the open end, and a blind bore defined therein extending into the cap body from the open end toward the closed end, the bore for receiving the end portion of the inner medium pipe so that the end portion of the medium pipe is enclosed within the end cap by inner walls of the cap body;
(ii) a corrosion inhibitor that prevents corrosion of the inner medium pipe, and the end cap located on the end portion of the inner medium pipe.

13. An assembly according to Claim 12 wherein the end cap is as defined in any of Claims 2 to 11; and/or wherein the end portion of the inner medium pipe has an outer diameter that is less than that of the reminder of the inner medium pipe.

14. A method of joining pipes to each other comprising the steps of:
(a) providing an assembly according to any of Claims 12 to 13,
(b) removing the end cap;
(c) joining the inner medium pipe to another medium pipe using a press fitting.

15. A method according to Claim 14 wherein the other medium pipe is also a composite pipe and that other composite pipe comprises:
(i) an inner medium pipe, the inner medium pipe made of a metal,
(ii) an insulation material about the inner medium pipe,
(iii) an outer casing about the insulation material; and/or comprising the steps of:
(a) providing a first assembly according to any of Claims 12 to 13,
(b) removing the end cap from the first assembly;
(c) providing a second assembly according to any of Claims 12 to 13,
(d) removing the end cap from the second assembly; and
(e) joining the inner medium pipe of the first assembly to the inner medium pipe of the second assembly using a press fitting.
